# EUROPÄISCHE PATENTSCHRIFT

(11) **EP 2 444 244 B1**
(45) Veröffentlichungstag und Bekanntmachung des Hinweises auf die Patenterteilung: **05.06.2013**
(21) Anmeldenummer: 11185017.8
(22) Anmeldetag: 13.10.2011
(51) Int. Cl.: B32B 3/00, F16F 9/30

(54) **Verbundwerkstoff und Verfahren zum Herstellen eines Verbundwerkstoffs**
composite material and process for manufacturing that material
materiau composite, ainsi que son procédé de fabrication

(30) Priorität: 25.10.2010 DE 102010042847
(43) Veröffentlichungstag der Anmeldung: 25.04.2012
(73) Patentinhaber: Universität Stuttgart, 70174 Stuttgart (DE)
(72) Erfinder: Bolay, Christian, 70186 Stuttgart (DE); Liewald, Mathias, 70190 Stuttgart (DE)
(74) Vertreter: Schmid, Wolfgang

(56) Entgegenhaltungen:
- DATABASE WPI Week 200978 Thomson Scientific, London, GB; AN 2009-R59993 XP002663527, -& JP 2009 275436 A (TAKENAKA KOMUTEN KK) 26. November 2009 (2009-11-26)

## Beschreibung

Die Erfindung betrifft einen Verbundwerkstoff mit zwei plattenförmigen Bauteilen und mit einer sich zwischen den plattenförmigen Bauteilen befindlichen Schicht aus einem visko-elastischen Material, ein Verfahren zum Herstellen eines solchen Verbundwerkstoffs und eine Verwendung des Verbundwerkstoffs.

Um Werkstoffe effizient ausnutzen zu können, werden in jüngster Zeit immer größere Anstrengungen unternommen und es wurden verschiedenartige belastungsangepasste Werkstoffe, wie beispielsweise hochfeste Bleche, Verbundwerkstoffe oder sogenannte "tailored blanks" entwickelt, welche höhere Bauteilsteifigkeiten bei reduziertem Gewicht ermöglichen sollen.

Die in den verschiedensten Ausführungen am Markt erhältlichen Blechverbundwerkstoffe können grob in zwei Varianten unterteilt werden, nämlich in Leichtbauverbundbleche und in Dämpfungsbleche.

Leichtbauverbundbleche, die beispielsweise unter den Bezeichnungen Alucobond^{®} oder Alulight^{®} vermarktet werden, weisen dicke Zwischenschichten aus hartem Kunststoff oder aus Aluminiumschaum auf, wodurch zwar hohe Leichtbaufaktoren realisiert werden können, was andererseits jedoch zu einer sehr schlechten Umformbarkeit dieser Leichtbauverbundbleche führt, so dass deren Einsatzmöglichkeiten sehr begrenzt sind. So ist es teilweise bereits bei sehr geringen Umformgraden, wie beispielsweise einem eindimensionalen Biegevorgang, erforderlich, Nuten in die Bleche zu fräsen. Darüber hinaus hängt die Steifigkeit von Leichtbauverbundblechen oft von der Dicke der Zwischenschicht ab.

Dämpfungsbleche, die beispielsweise unter der Bezeichnung Bondal^{®} bekannt sind und die aus zwei Einzelblechen mit einer dazwischen angeordneten, visko-elastische Zwischenschicht, mit der Schwingungen über innere Reibung abgebaut werden, bestehen, können wesentlich besser umgeformt werden als Leichtbauverbundbleche, besitzen aber keinen Leichtbaufaktor, da ihre Steifigkeit sogar meist geringer ist als diejenige von monolithischem Blech. Mit anderen Worten: Um bei solchen, aus wenigstens zwei Einzelblechen und einer Zwischenschicht bestehenden Dämpfungsblechen dieselbe Festigkeit wie bei einem massiven, monolithischen Blech zu erreichen, ist ein größerer Werkstoffeinsatz, verbunden mit einem höheren Gewicht und einem größeren Volumen erforderlich.

Ein Beispiel für ein derartiges Dämpfungsblech ist der EP 0 167 455 B1 zu entnehmen. Das dort beschriebene, schwingungsdämpfende Verbundlaminat weist zwei Schichten aus einem Metall in paralleler Anordnung und eine dicht zwischen die zwei Metallschichten eingefügte Schicht aus einer visko-elastischen Polymerzusammensetzung auf.

Ein weiterer Verbundwerkstoff für die Schwingungsdämpfung und Körperschalldämpfung ist der EP 0 278 248 B1 zu entnehmen. Dabei sind mehrere Schichten aus einem harten Werkstoff durch eine visko-elastische Zwischenschicht miteinander verbunden, wobei zur Erweiterung des Temperaturbereichs, in dem der dort beschriebene Verbundwerkstoff eingesetzt werden kann, mehr als zwei harte Schichten vorgesehen sind, die durch jeweils eine visko-elastische Zwischenschicht miteinander verbunden sind, und wobei die Bereiche maximaler Dämpfung oder Erweichungsbereiche der visko-elastischen Zwischenschichten in verschieden hohen Temperaturbereichen liegen.

Aus dem allgemeinen Stand der Technik sind des weiteren flache Blechbauteile bekannt, die zur Erhöhung ihrer Steifigkeit mit Versteifungssicken versehen sind. Solche Versteifungssicken erhöhen das Trägheitsmoment der Blechbauteile und somit deren Leichtbaufaktor. Nachteilig dabei ist allerdings die Tatsache, dass diese Blechbauteile keine ebene Oberfläche aufweisen, da sich die Versteifungssicken auf beiden Bauteilseiten abzeichnen, wodurch der Einsatzzweck dieser versteiften Blechbauteile begrenzt ist, da Blechbauteile bei sehr vielen Anwendungen zumindest eine ebene Oberfläche aufweisen müssen. Des Weiteren ist die für die Versteifungswirkung maßgebliche Sickentiefe aufgrund des Umformvermögens der Blechwerkstoffe begrenzt. Zudem wird unter Last das eingespannte Bauteil aufgrund des sogenannten Ziehharmonika-Effekts zusätzlich geschwächt und es stellt sich eine im Vergleich zum ebenen Blech erhöhte Durchbiegung ein.

Ein gattungsgemäßer Verbundwerkstoff, der beispielsweise in Gehäusen von Festplatten eingesetzt werden kann, ist aus der US 5,214,549 A bekannt. Die dabei über das plattenförmige Bauteil überstehenden Formelemente dienen allerdings als Befestigungshilfen.

In der DE 11 2008 001 900 T5 ist ein laminiertes Blech mit zwei Tafeln aus Metall und einer sich zwischen den Tafeln befindlichen Polymerschicht beschrieben. Dieses laminierte Blech kann nach einer entsprechenden Tiefziehoperation beispielsweise als Fahrzeugsitzwanne verwendet werden.

Es ist Aufgabe der vorliegenden Erfindung, einen Verbundwerkstoff, der eine hohe Steifigkeit, ein geringes Gewicht und gute Dämpfungseigenschaften aufweist und der für die verschiedensten Anwendungen geeignet ist, sowie ein Verfahren zu dessen Herstellung zu schaffen.

Erfindungsgemäß wird diese Aufgabe durch die in Anspruch 1 genannten Merkmale gelöst.

Durch die unterschiedliche Ausgestaltung der beiden plattenförmigen Bauteile des erfindungsgemäßen Verbundwerkstoffs, wobei das eine plattenförmige Bauteil wenigstens ein Formelement und das andere plattenförmige Bauteil eine im wesentlichen ebene Oberfläche aufweist, ergibt sich ein Verbundwerkstoff mit einer Reihe von Vorteilen.

Durch die Formelemente des einen plattenförmigen Bauteils wird das Flächenträgheitsmoment und somit die Steifigkeit des gesamten Verbundwerkstoffs erheblich erhöht, wodurch sich entweder bei unveränderter Materialdicke eine erheblich vergrößerte Steifigkeit des Verbundwerkstoffs oder bei gleicher Steifigkeit eine verringerte Materialdicke desselben ergibt und somit der Leichtbaufaktor des Verbundwerkstoffs bei verbesserten Bauteileigenschaften ansteigt. Die in dem einen plattenförmigen Bauteil enthaltenen, durch Umformung erzeugten, Formelemente verlagern dabei die Versteifung des Verbundwerkstoffs von einem Bereich zwischen den beiden plattenförmigen Bauteilen in eine der Deckschichten, nämlich in das das wenigstens eine Formelement aufweisende plattenförmige Bauteil. Durch die Umformung lassen sich die Formelemente auf sehr einfache Weise herstellen und es ergibt sich eine erhöhte Steifigkeit des plattenförmigen Elements. Mit den Formelementen lässt sich das plattenförmige Element also gezielt versteifen.

Die erfindungsgemäß zwischen den beiden plattenförmigen Bauteilen vorhandene Schicht aus dem visko-elastischen Material, die eine Zwischenschicht zwischen den beiden plattenförmigen Bauteilen bildet, wird mit der einseitig versteiften Deckschicht verknüpft, wohingegen das andere, eine im Wesentlichen ebene Oberfläche aufweisende plattenförmige Bauteil als Stützelement wirkt, so dass gegenüber bekannten Lösungen erheblich tiefere Formelemente realisiert werden können, wodurch sich eine größere Steifigkeit des gesamten Verbundwerkstoffs ergibt, ohne dass die Formelemente durch den Ziehharmonika-Effekt geschwächt werden können. Erfindungsgemäß wird also die Kombination von guten Schall- und Schwingungsdämpfungseigenschaften bei gleichzeitig gezielt einstellbarer Steifigkeit und eine ebene Sichtfläche auf der anderen Seite des Verbundwerkstoffs ermöglicht. Dabei werden durch die sich zwischen den beiden plattenförmigen Bauteilen befindliche Schicht aus dem visko-elastischen Material beim Einsatz des erfindungsgemäßen Verbundwerkstoffs entstehende Biegeschwingungen in Wärme umgewandelt und somit abgebaut.

Zusätzlich zu der Möglichkeit, dünnere Bleche einzusetzen, können auch nachträgliche Dämpfungsmaßnahmen entfallen oder reduziert werden, wodurch insbesondere im mobilen Einsatz des erfindungsgemäßen Verbundwerkstoffs ein erhebliches Potenzial zur Einsparung von Gewicht entsteht.

Im Vergleich zu bekannten Lösungen kann die visko-elastische Schicht zwischen den beiden plattenförmigen Bauteilen sehr dünn ausgeführt werden, wodurch der erfindungsgemäße Verbundwerkstoff sehr viel besser umgeformt werden kann als solche bekannten Werkstoffe mit dicken, die Steifigkeit erzeugenden Schichten aus hartem Kunststoff oder Aluminiumschaum. Der Grund dafür ist darin zu sehen, dass eine dünnere Zwischenschicht geringere Schubspannungen in den Bereich zwischen den beiden äußeren, plattenförmigen Bauteilen impliziert und damit geringere Verschiebungen der äußeren Deckbleche bzw. plattenförmigen Bauteile zueinander zulässt. Durch die dünne Zwischenschicht aus dem visko-elastischen Material werden also hohe Schubbelastungen in der Fügeschicht vermieden und die Gefahr der Delamination reduziert, wodurch die Umformbarkeit des erfindungsgemäßen Verbundwerkstoffs weiter verbessert wird. Der erfindungsgemäße Verbundwerkstoff ermöglicht dabei durch den Einsatz des wenigstens einen Formelements die gezielte Versteifung und Verfestigung von Bereichen, die bei einer späteren Umformung geringere Umformgrade und somit eine geringere Kaltverfestigung erfahren.

Dabei kann das die im Wesentlichen ebene Oberfläche aufweisende plattenförmige Bauteil problemlos lackiert und, im Gegensatz zu den bekannten Versteifungsblechen, als Sichtfläche eingesetzt werden, wodurch die Verwendungsmöglichkeiten für den erfindungsgemäßen Verbundwerkstoff erheblich ansteigen.

Hinsichtlich der Versteifung des Verbundwerkstoffs hat es sich als besonders vorteilhaft herausgestellt, wenn das wenigstens eine Formelement als Höcker oder Sicke ausgebildet ist.

Wenn in einer weiteren vorteilhaften Ausgestaltung der Erfindung über die Oberfläche des plattenförmigen Bauteils verteilt mehrere Formelemente vorgesehen sind, so lässt sich eine besonders gute Anpassung des Verbundwerkstoffs an die verschiedensten Einsatzzwecke erreichen.

Um den erfindungsgemäßen Verbundwerkstoff bei Anwendungen einsetzen zu können, in denen eine Beeinflussung einer Strömung gewünscht ist, kann in einer weiteren vorteilhaften Ausgestaltung der Erfindung vorgesehen sein, dass das eine im Wesentlichen ebene Oberfläche aufweisende plattenförmige Bauteil mit einer Oberflächenstruktur, insbesondere einer steifigkeitsverbessernden Struktur, versehen ist.

Es kann vorgesehen sein, dass das wenigstens eine Formelement einen Hohlraum ausbildet. Ein solcher Hohlraum trägt vorteilhafterweise zur weiteren Versteifung des Verbundwerkstoffs bei.

Des Weiteren kann vorgesehen sein, dass die Schicht aus dem visko-elastischen Material sich auch innerhalb des wenigstens einen Hohlraums befindet. Ein derartiges Auffüllen des Hohlraums des wenigstens einen Formelements mit dem visko-elastischen Material führt zu einer Erhöhung der Steifigkeit des gesamten Verbundwerkstoffs, ohne dass dessen Volumen erhöht wird.

In einer vorteilhaften Ausführungsform der Erfindung kann vorgesehen sein, dass die Schicht aus dem visko-elastischen Material sich nicht innerhalb des wenigstens einen Hohlraums befindet. Auch bei einer solchen Ausführungsform des Verbundwerkstoffs kann die sich durch die Hohlräume ergebende Steifigkeit ausgenutzt werden, wobei des Weiteren keine Gewichtserhöhung zu verzeichnen ist.

Obwohl es prinzipiell auch möglich ist, die beiden plattenförmigen Bauteile mit zusätzlichen Verbindungselementen, wie beispielsweise einem umlaufenden Rahmen, Schrauben, Nieten oder dergleichen zu verbinden, ist es besonders vorteilhaft, wenn das die Schicht bildende visko-elastische Material ein Klebstoff ist, da das visko-elastische Material auf diese Weise sowohl die oben beschriebene Funktion der Schall- und Schwingungsdämpfung als auch die Funktion der Verbindung der beiden plattenförmigen Bauteile übernimmt.

In einer weiteren vorteilhaften Ausführungsform der Erfindung kann vorgesehen sein, dass innerhalb des wenigstens einen Formelements ein Funktionselement angeordnet ist und/oder dass das wenigstens eine Formelement als ein Funktionselement ausgebildet ist. Eine derartige Integration von Funktionselementen, wie beispielsweise Kabeln, Schläuchen oder auch Materialien mit besonderen Eigenschaften, wie beispielsweise magnetischen Eigenschaften oder den Auftrieb des Verbundwerkstoffs beeinflussenden Eigenschaften, in das wenigstens eine Formelement ist besonders vorteilhaft, da auf diese Weise das Formelement einer zusätzlichen Nutzung zugeführt wird. Des Weiteren kann das Formelement auch als Designelement, als Funktionselement zur Strömungsregulierung oder -beeinflussung, als Anschlag, Führung oder dergleichen verwendet werden.

Ein Verfahren zum Herstellen eines erfindungsgemäßen Verbundwerkstoffs ist in Anspruch 10 angegeben. Dieses Verfahren, bei dem während des Verbindens der beiden plattenförmigen Bauteile wenigstens eines der plattenförmigen Bauteile umgeformt wird, ist besonders vorteilhaft, da auf diese Weise ein Verfahrensschritt eingespart werden kann.

In einer besonders vorteilhaften Weiterbildung der Erfindung kann vorgesehen sein, dass das das wenigstens eine Formelement aufweisende plattenförmige Bauteil mit der Schicht aus dem visko-elastischen Material versehen wird, wobei die Schicht aus dem visko-elastischen Material auch in wenigstens einen durch das wenigstens eine Formelement gebildeten Hohlraum eingebracht wird. Durch diese Einbringung des visko-elastischen Material in das wenigstens eine Formelement wird eine zusätzliche Versteifung des Formelements und somit des gesamten Verbundwerkstoffs erreicht.

Alternativ dazu kann vorgesehen sein, dass das die Schicht aus dem visko-elastischen Material auf das andere, das wenigstens eine Formelement nicht aufweisende plattenförmige Bauteil aufgebracht wird. Bei dieser Vorgehensweise, die ein Einbringen des visko-elastischen Material in das Formelement im Wesentlichen verhindert, wird eine Einsparung des visko-elastischen Materials erreicht und gleichzeitig ein gegenüber der anderen Lösung leichterer Verbundwerkstoff erzeugt. Des Weiteren ist bei dieser Vorgehensweise des Aufbringens des visko-elastischen Materials auf das ebene plattenförmige Bauteil ein leichteres Auftragen möglich.

Eine besonders einfache Herstellung des Verbundwerkstoffs ergibt sich, wenn die Formelemente mittels Umformen in das plattenförmige Bauteil eingebracht werden.

Vorteilhafte Verwendungen des erfindungsgemäßen Verbundwerkstoffs ergeben sich aus Anspruch 14.

Nachfolgend sind Ausführungsbeispiele der Erfindung anhand der Zeichnung prinzipmäßig dargestellt.

Es zeigt:
- Fig. 1: einen Schnitt durch einen erfindungsgemäßen Ver-bundwerkstoff nach der Linie I-I aus Fig. 2;
- Fig. 2: eine Ansicht des Verbundwerkstoffs gemäß dem Pfeil II aus Fig. 1;
- Fig. 3: ein aus dem erfindungsgemäßen Verbundwerkstoff hergestelltes Bauteil; und
- Fig. 4: eine Ausführungsform des Verbundwerkstoffs, wel-cher mehrere Formelemente aufweist, welche unter-schiedliche Funktionen übernehmen.

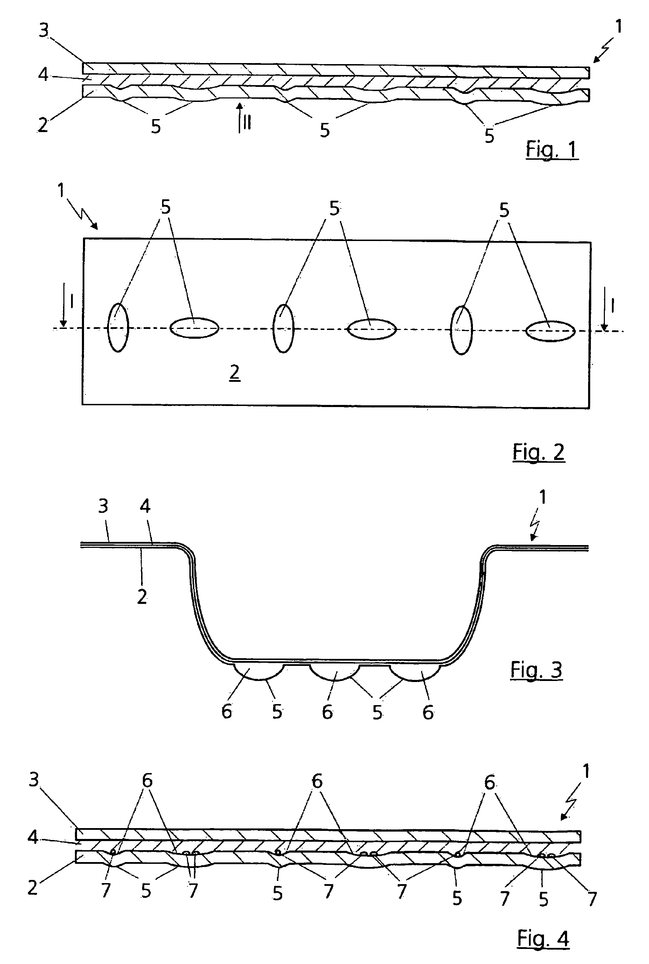

Fig. 1 zeigt in einer sehr schematischen Darstellung einen Schnitt durch einen Verbundwerkstoff 1, der eine im Vergleich zu seiner Flächenerstreckung verhältnismäßig geringe Dicke aufweist. Prinzipiell kann der Verbundwerkstoff 1 eine beliebig große Flächenerstreckung und beliebige Formen aufweisen.

Der Verbundwerkstoff 1 weist zwei plattenförmige Bauteile, nämlich ein erstes plattenförmiges Bauteil 2 und ein zweites plattenförmiges Bauteil 3 auf. Als Material für die plattenförmigen Bauteile 2 und 3 können verschiedene Metalle, insbesondere Aluminium, Stahl oder auch Edelstahl eingesetzt werden. Zwischen den plattenförmigen Bauteilen 2 und 3 befindet sich eine Schicht 4 aus visko-elastischem Material. In diesem Zusammenhang wird unter Viskoelastizität die zeit-, temperatur- und frequenzabhängige Elastizität von polymeren Schmelzen oder Festkörpern verstanden. Die Viskoelastizität ist durch ein teilweise elastisches, teilweise viskoses Verhalten geprägt. Das Material relaxiert nach Entfernen der externen Kraft nur unvollständig, die verbleibende Energie wird in Form von Fließvorgängen abgebaut. Es liegt also eine Hysterese zwischen Belastung und Entlastung vor.

Die Schicht 4 aus dem visko-elastischen Material ist vorzugsweise als ein Klebstoff ausgebildet, der zur Verbindung der beiden plattenförmigen Bauteile 2 und 3 dient. Hierbei kann es sich im Prinzip um einen beliebigen Klebstoff handeln, der sowohl gute Adhäsionseigenschaften an den beiden plattenförmigen Bauteilen 2 und 3, gute Kohäsionseigenschaften und gute Dämpfungseigenschaften hinsichtlich der Dämpfung von Schwingungen aller Art, beispielweise der Dämpfung von Schallschwingungen aufweist. Durch die Auswahl des visko-elastischen Materials der Schicht 4 kann eine bestimmte Steifigkeit des Verbundwerkstoffs 1 und eine bestimmte Dämpfung zwischen den beiden plattenförmigen Bauteilen 2 und 3 eingestellt werden, wobei ein härteres visko-elastisches Material für die Schicht 4 eine höhere Steifigkeit zwischen den beiden plattenförmigen Bauteilen 2 und 3 und damit auch eine höhere Steifigkeit des gesamten Verbundwerkstoffs 1 ergibt und ein weicheres visko-elastisches Material für die Schicht 4 zu einer besseren Dämpfung zwischen den beiden plattenförmigen Bauteilen 2 und 3 führt. Beispielsweise kann das visko-elastische Material auf einem Epoxidharz basieren, es sind jedoch auch andere visko-elastische Materialien für die Schicht 4 denkbar. Vorzugsweise wird für das visko-elastische Material der Schicht 4 ein Klebstoff verwendet, der eine relativ gute Scherfestigkeit bei gleichzeitig relativ guten Dämpfungswerten aufweist, wobei die meisten Werkstoffe nur ein Kompromiss aus diesen beiden Eigenschaften bieten können. Statt der Verbindung der beiden plattenförmigen Bauteile 2 und 3 mittels einer als Klebstoff ausgebildeten Schicht 4 kann die Schicht 4 auch aus einem visko-elastischen Material bestehen, welches keine Adhäsionseigenschaften aufweist. In diesem Fall sind zur Verbindung der plattenförmigen Bauteile 2 und 3 andere Maßnahmen erforderlich, wie beispielsweise mehrere Punktverschweißungen, ein umlaufender Rahmen, Schrauben, Nieten oder dergleichen. Durch die Ausgestaltung der Schicht 4 als Klebstoffschicht wird jedoch der Einsatz von die Dämpfung der Schicht 4 eventuell herabsetzenden Maßnahmen, wie der Einsatz von Nieten und ähnlichen Elementen, vermieden. Eine weitere Möglichkeit besteht darin, Metallpartikel in das visko-elastische Material der Schicht 4 einzubringen, um eine Verschweißbarkeit des gesamten Verbundwerkstoffs 1 sicherzustellen.

Im vorliegenden Fall weist das erste plattenförmige Bauteil 2 mehrere, sich von seiner flächenmäßigen Erstreckung weg erhebende, einteilig mit dem plattenförmigen Bauteil 2 ausgebildete Formelemente 5 auf, welche vorzugsweise als Höcker, Sicken, Näpfe oder dergleichen ausgebildet sind.

Demgegenüber weist das andere, zweite plattenförmige Bauteil 3 eine im Wesentlichen ebene Oberfläche auf. In der Darstellung gemäß Fig. 1 handelt es sich bei dem die Formelemente 5 aufweisenden ersten plattenförmigen Bauteil 2 um das untere Bauteil, es ist jedoch ebenso möglich, dass das obere Bauteil die Formelemente 5 und das untere Bauteil die ebene Oberfläche aufweist. Mit dem Begriff "eben" ist eine Oberfläche gemeint, die keine wesentlichen Erhebungen oder Vertiefungen aufweist. Die später beschriebene Umformbarkeit des Verbundwerkstoffs 1, durch welche derselbe stark gekrümmt sein kann, ist dadurch nicht betroffen.

Die Formelemente 5 sorgen für eine erhebliche Versteifung des ersten plattenförmigen Bauteils 2, wodurch die Steifigkeit des gesamten Verbundwerkstoffs 1 erheblich erhöht wird. Dadurch erhöhen die Formelemente 5 des Trägheitsmoment des Verbundwerkstoffs 1 und somit den Leichtbaufaktor desselben.

Je nach Größe und Anwendungszweck können über die Oberfläche des plattenförmigen Bauteils 2 verteilt mehrere Formelemente 5 vorgesehen sein, es ist jedoch auch möglich, lediglich eines der Formelemente 5 vorzusehen. Dabei können sich die Formen und Größen der Formelemente 5 wiederholen, wie dies in dem Ausführungsbeispiel von Fig. 1 und Fig. 2 dargestellt ist, es sind jedoch auch beliebige andere Verteilungen der Formelemente 5 nach Form und Größe über die Fläche des plattenförmigen Bauteils 2 möglich. Im vorliegenden Fall sind die Formelemente 5 des ersten plattenförmigen Bauteils 2 als sich von dem zweiten plattenförmigen Bauteil 3 nach außen weg erstreckenden Erhebungen ausgebildet, die in Richtung zu dem zweiten plattenförmigen Bauteil 3 hin jeweilige Vertiefungen bilden, die als Hohlräume 6 ausgeführt sein können. Dies wird dadurch ermöglicht, dass die Formelemente 5 durch Umformen hergestellt werden. Dabei lassen sich unterschiedliche Anpassungen des Verbundwerkstoffs 1 an den jeweiligen Verwendungszweck desselben erreichen. Zur Auslegung der Lage, Form und Größe der Formelemente 5 können Gestaltungsrichtlinien oder Strukturoptimierungsprogramme eingesetzt werden. Derartige Programme können außerdem mit Umformsimulationen gekoppelt werden.

Das zweite plattenförmige Bauteil 3, welches die im Wesentlichen ebene Oberfläche aufweist, kann an seiner äußeren Oberfläche mit einer Oberflächenstruktur, insbesondere einer steifigkeitsverbessernden Struktur, versehen sein, beispielsweise um Strömungen entlang des Verbundwerkstoffs 1 zu beeinflussen. Hierbei kann es sich um an sich bekannte steifigkeitsverbessernde Strukturen handeln, die für die unterschiedlichsten Einsatzzwecke vorgesehen sein können. Mit solchen Oberflächenstrukturen können beispielsweise laminare Strömungen oder selbstreinigende Effekte entlang des die ebene Oberfläche aufweisenden zweiten plattenförmigen Bauteils 3 des Verbundwerkstoffs 1 erreicht werden. Selbstverständlich ist es auch möglich, das erste, das wenigstens einen Formelement 5 aufweisende plattenförmige Bauteil 2 mit einer solchen Oberflächenstruktur, insbesondere einer steifigkeitsverbessernden Struktur, zu versehen.

Zur Herstellung des Verbundwerkstoffs 1 kann das visko-elastische Material auf das das wenigstens eine Formelement 5 aufweisende erste plattenförmige Bauteil 2 aufgebracht werden, um anschließend das zweite plattenförmige Bauteil 3 mit dem ersten plattenförmigen Bauteil 2 zu verpressen, und so für eine Verbindung der beiden plattenförmigen Bauteile 2 und 3 zu sorgen. Dabei kann das die Schicht 4 bildende visko-elastische Material auch in einen durch das Formelement 5 gebildeten Hohlraum 6 eingebracht werden, so dass sich im fertigen Zustand des Verbundwerkstoffs 1 das visko-elastische Material der Schicht 4 auch innerhalb des Hohlraums 6 des Formelements 5 befindet.

Dies erhöht die Dämpfungswirkung der Schicht 4 und die Steifigkeit des Verbundwerkstoffs 1. Alternativ dazu kann das visko-elastische Material der Schicht 4 auf das andere, das wenigstens eine Formelement 5 nicht aufweisende zweite plattenförmige Bauteil 3 aufgebracht werden. Dabei kann vorgesehen sein, nur eine so große Menge des die Schicht 4 bildenden visko-elastischen Materials auf das zweite plattenförmige Bauteil 3 aufzubringen, dass das visko-elastische Material nicht in die Hohlräume 6 der Formelemente 5 eindringt, um das Gewicht des Verbundwerkstoffs 1 nicht zu erhöhen. Es ist jedoch auch möglich, das visko-elastische Material in einer derartigen Menge auf das zweite plattenförmige Bauteil 3 aufzubringen, dass sich das visko-elastische Material dennoch in dem Hohlraum 6 des Formelements 5 befindet, um die oben beschriebene Erhöhung der Steifigkeit des Verbundwerkstoffs 1 zu erreichen. Auch eine teilweise Füllung des Hohlraums 6 bzw. der Hohlräume 6 des Formelements 5 ist möglich.

Prinzipiell kann der Verbundwerkstoff 1 beispielsweise durch Tiefziehen umgeformt werden, wobei vorgesehen sein kann, während des Verbindens der beiden plattenförmigen Bauteile 2 und 3 wenigstens eines der plattenförmigen Bauteile 2 oder 3 umzuformen, d.h. den Verbundwerkstoff 1 während der Formgebung zu fügen. Wenn dabei lediglich eines der beiden plattenförmigen Bauteile 2 oder 3 umgeformt wird, sollte das andere plattenförmige Bauteil 2 oder 3 bereits in einem vorhergehenden Schritt umgeformt worden sein. Um zu vermeiden, dass das visko-elastische Material in seinem noch nicht gehärteten Zustand durch die Reibung während der Umformung entfernt wird, ist es jedoch technisch sinnvoller, beide plattenförmigen Bauteile 2 und 3 vor dem Aufbringen des visko-elastischen Materials zu fügen.

Ein Beispiel für ein solches aus dem Verbundwerkstoff 1 hergestelltes Tiefziehteil ist in Fig. 3 dargestellt. Hierbei ist die Schicht 4 aus dem visko-elastischen Material der Einfachheit halber nur mittels einer durchgezogenen Linie dargestellt. Vorzugsweise füllt auch hier die Schicht 4 den gesamten Bereich zwischen den plattenförmigen Bauteil 2 und 3 aus, wobei die Hohlräume 6 der Formelemente 5 mit dem visko-elastischen Material gefüllt sein können oder nicht.

Fig. 4 zeigt eine weitere Möglichkeit, wie die Formelemente 5 des ersten plattenförmigen Bauteils 2 genutzt werden können. Hierbei ist innerhalb wenigstens eines der Formelemente 5, im vorliegenden Fall in sämtlichen Formelementen 5, ein Funktionselement 7 angeordnet, welches bei der späteren Verwendung des Verbundwerkstoffs 1 eine bestimmte Funktion übernehmen kann. Im dargestellten Ausführungsbeispiel handelt es sich bei dem Funktionselement 7 um ein elektrisches Kabel, es können jedoch auch Flüssigkeitsleitungen, zum Beispiel Kühlleitungen, Zugseile oder dergleichen in den Formelementen 5 untergebracht sein. Eine weitere Möglichkeit zur zusätzlichen Nutzung der Formelemente 5 kann darin bestehen, dass diese selbst Funktionselemente bilden, wie beispielsweise Elemente zur Leitung einer Strömung, Anschlagelemente, um einen Gegenstand in einer bestimmten Position anzuordnen, Führungselemente oder dergleichen.

Der oben beschriebene Verbundwerkstoff 1 kann für die verschiedensten Anwendungen geeignet sein, beispielsweise als Maschinengehäuse, als Reflektorspiegel, als Halbzeug für die unterschiedlichsten Tiefziehteile, wie beispielsweise Wannen oder ähnliches, als Behälter, wie zum Beispiel Container, als Fassadenteil, als Verschalung, als Raumteiler oder als Karosserieblech. Selbstverständlich sind auch noch andere, hierin nicht aufgeführte Verwendungen des Verbundwerkstoffs 1 denkbar.

Insbesondere bei der Herstellung einer Wanne aus dem Verbundwerkstoff 1 ist die oben beschriebene Kombination aus guter Umformbarkeit und guter Dämpfung aufgrund der Schicht 4 aus dem visko-elastischen Material vorteilhaft, da auf diese Weise auf bislang verwendete Entdröhnbeläge verzichtet werden kann. Selbstverständlich sollten die Formelemente 5 dabei an denjenigen Stellen nicht vorgesehen sein, die während des Tiefziehens mit einem hohen Umformgrad umgeformt werden.

Insbesondere bei der Verwendung als Karosserieblech kann der Verbundwerkstoff 1 als großflächiges Halbzeug ausgeführt sein, das dann annähernd beliebig umgeformt werden kann. Wiederum sollten die Formelemente 5 in den Bereichen ausgespart werden, die eine größere Umformung erfahren. Beispielsweise könnten aus dem Verbundwerkstoff 1 eine Motorhaube für ein Kraftfahrzeug hergestellt werden, die in bestimmten Bereichen eine geringere Festigkeit aufweist, um den Fußgängerschutz zu erhöhen.

## Patentansprüche

1. Verbundwerkstoff (1) mit zwei plattenförmigen Bauteilen (2,3) und mit einer sich zwischen den plattenförmigen Bauteilen (2,3) befindlichen Schicht (4) aus einem visko-elastischen Material,
**dadurch gekennzeichnet, dass** eines der plattenförmigen Bauteile (2) wenigstens ein sich von seiner flächenmäßigen Erstreckung weg erhebendes, durch Umformen hergestelltes Formelement (5) und das andere plattenförmige Bauteil (3) eine im Wesentlichen ebene Oberfläche aufweist.

2. Verbundwerkstoff nach Anspruch 1,
**dadurch gekennzeichnet, dass** das wenigstens eine Formelement (5) als Höcker oder Sicke ausgebildet ist.

3. Verbundwerkstoff nach Anspruch 1 oder 2,
**dadurch gekennzeichnet, dass** über die Oberfläche des plattenförmigen Bauteils (2) verteilt mehrere Formelemente (5) vorgesehen sind.

4. Verbundwerkstoff nach Anspruch 1, 2 oder 3,
**dadurch gekennzeichnet, dass** das eine im Wesentlichen ebene Oberfläche aufweisende plattenförmige Bauteil (3) mit einer Oberflächenstruktur, insbesondere einer steifigkeitsverbessernden Struktur, versehen ist.

5. Verbundwerkstoff nach einem der Ansprüche 1 bis 4,
**dadurch gekennzeichnet, dass** das wenigstens eine Formelement (5) einen Hohlraum (6) ausbildet.

6. Verbundwerkstoff nach Anspruch 5,
**dadurch gekennzeichnet, dass** die Schicht (4) aus dem visko-elastischen Material sich auch innerhalb des wenigstens einen Hohlraums (6) befindet.

7. Verbundwerkstoff nach Anspruch 5,
**dadurch gekennzeichnet, dass** die Schicht (4) aus dem visko-elastischen Material sich nicht innerhalb des wenigstens einen Hohlraums (6) befindet.

8. Verbundwerkstoff nach einem der Ansprüche 1 bis 7,
**dadurch gekennzeichnet, dass** das die Schicht (4) bildende visko-elastische Material ein Klebstoff ist.

9. Verbundwerkstoff nach einem der Ansprüche 1 bis 7,
**dadurch gekennzeichnet, dass** innerhalb des wenigstens einen Formelements (5) ein Funktionselement (7) angeordnet ist und/oder dass das wenigstens eine Formelement (5) als ein Funktionselement ausgebildet ist.

10. Verfahren zum Herstellen eines Verbundwerkstoffs nach einem der Ansprüche 1 bis 9, wobei auf eines der plattenförmigen Bauteile (2,3) die Schicht (4) aus dem visko-elastischen Material aufgebracht wird, wonach die beiden plattenförmigen Bauteile (2,3) miteinander verbunden werden, und wobei während des Verbindens der beiden plattenförmigen Bauteile (2,3) wenigstens eines der plattenförmigen Bauteile (2,3) umgeformt wird.

11. Verfahren nach Anspruch 10,
**dadurch gekennzeichnet, dass** das das wenigstens eine Formelement (5) aufweisende plattenförmige Bauteil (2) mit der Schicht (4) aus dem visko-elastischen Material versehen wird, wobei die Schicht (4) aus dem visko-elastischen Material auch in wenigstens einen durch das wenigstens eine Formelement (5) gebildeten Hohlraum (6) eingebracht wird.

12. Verfahren nach Anspruch 10,
**dadurch gekennzeichnet, dass** die Schicht (4) aus dem visko-elastischen Material auf das andere, das wenigstens ein Formelement (5) nicht aufweisende plattenförmige Bauteil (3) aufgebracht wird.

13. Verfahren nach Anspruch 10, 11 oder 12,
**dadurch gekennzeichnet, dass** die Formelemente (5) mittels Umformen in das plattenförmige Bauteil (2) eingebracht werden.

14. Verwendung des Verbundwerkstoffs nach einem der Ansprüche 1 bis 9 für ein Maschinengehäuse, einen Reflektorspiegel, ein Halbzeug für Tiefziehteile, ein Fassadenteil, einen Behälter, eine Verschalung, einen Raumteiler oder ein Karosserieblech.

## Claims

1. Composite material (1) having two sheet-form components (2, 3) and having a layer (4) of a visco-elastic material located between the sheet-form components (2, 3),
**characterised in that**
one of the sheet-form components (2) has at least one shaped element (5) which rises away from its areal extent and has been produced by deformation, and the other sheet-form component (3) has a substantially flat surface.

2. Composite material according to claim 1,
**characterised in that**
the at least one shaped element (5) is in the form of a protuberance or bead.

3. Composite material according to claim 1 or 2,
**characterised in that**
a plurality of shaped elements (5) distributed over the surface of the sheet-form component (2) is provided.

4. Composite material according to claim 1, 2 or 3,
**characterised in that**
the sheet-form component (3) having a substantially flat surface is provided with a surface structure, in particular a stiffness-improving structure.

5. Composite material according to any one of claims 1 to 4,
**characterised in that**
at least one shaped element (5) forms a cavity (6).

6. Composite material according to claim 5,
**characterised in that**
the layer (4) of the visco-elastic material is located inside the at least one cavity (6).

7. Composite material according to claim 5,
**characterised in that**
the layer (4) of the visco-elastic material is not located inside the at least one cavity (6).

8. Composite material according to any one of claims 1 to 7,
**characterised in that**
the visco-elastic material forming the layer (4) is an adhesive.

9. Composite material according to any one of claims 1 to 7,
**characterised in that**
a functional element (7) is arranged inside the at least one shaped element (5) and/or **in that** the at least one shaped element (5) is in the form of a functional element.

10. Process for the production of a composite material according to any one of claims 1 to 9, wherein the layer (4) of the visco-elastic material is applied to one of the sheet-form components (2, 3), following which the two sheet-form components (2, 3) are joined together, and wherein at least one of the sheet-form components (2, 3) is deformed during the joining of the two sheet-form components (2, 3).

11. Process according to claim 10,
**characterised in that**
the sheet-form component (2) having the at least one shaped element (5) is provided with the layer (4) of the visco-elastic material, wherein the layer (4) of the visco-elastic material is also introduced into at least one cavity (6) formed by the at least one shaped element (5).

12. Process according to claim 10,
**characterised in that**
the layer (4) of the visco-elastic material is applied to the other sheet-form component (3) which does not have the at least one shaped element (5).

13. Process according to claim 10, 11 or 12,
**characterised in that**
the shaped elements (5) are introduced into the sheet- form component (2) by deformation.

14. Use of the composite material according to any one of claims 1 to 9 for a machine housing, a reflecting mirror, a semi-finished product for deepdrawn parts, a facing part, a container, a cladding, a partition or a car body sheet.

## Revendications

1. Matériau de liaison (1) avec deux pièces de construction (2, 3) en forme de plaques et avec une couche intermédiaire (4) disposée entre les deux pièces de construction (2, 3) en forme de plaques et faite en un matériau visco-élastique,
**caractérisé en ce que,**
une des pièces de construction (2) en forme de plaque comporte au moins un élément structuré (5), réalisé par formage, s'élevant en relief par rapport à la surface de son cheminement, et **en ce que** l'autre pièce de construction (3) en forme de plaque présente une surface supérieure sensiblement plane.

2. Matériau de liaison selon la revendication 1,
**caractérisé en ce que,**
ledit au moins un élément structuré (5) est en forme de bosse ou de moulure.

3. Matériau de liaison selon la revendication 1 ou 2,
**caractérisé en ce que,**
la pièce de construction (2) en forme de plaque comporte plusieurs éléments structurés (5) distribués sur sa surface.

4. Matériau de liaison selon la revendication 1, 2 ou 3,
**caractérisé en ce que,**
la pièce de construction (3) en forme de plaque ayant une surface sensiblement plane est pourvue d'une structure superficielle, en particulier d'une structure pour améliorer la rigidité.

5. Matériau de liaison selon l'une des revendications 1 à 4,
**caractérisé en ce que,**
ledit au moins un élément structuré (5) constitue un espace creux (6).

6. Matériau de liaison selon la revendication 5,
**caractérisé en ce que,**
la couche (4) de matériau visco-élastique est également présente à l'intérieur dudit au moins un espace creux (6).

7. Matériau de liaison selon la revendication 5,
**caractérisé en ce que,**
la couche (4) de matériau visco-élastique ne se trouve pas à l'intérieur dudit au moins un espace creux (6).

8. Matériau de liaison selon l'une des revendications 1 à 7,
**caractérisé en ce que,**
la couche (4) de matériau visco-élastique est un adhésif.

9. Matériau de liaison selon l'une des revendications 1 à 7,
**caractérisé en ce que,**
à l'intérieur dudit au moins un élément structuré (5) est disposé un élément fonctionnel (7) et/ou ledit au moins un élément structuré (5) constitue en soi un élément fonctionnel.

10. Procédé de réalisation d'un matériau de couplage selon l'une des revendications 1 à 9, dans lequel on dépose la couche de matériau visco-élastique (4) sur une des pièces de construction (2, 3) en forme de plaques, après quoi, pendant que l'on effectue la liaison entre elles des deux pièces de construction (2, 3) en forme de plaques, on effectue le formage d'au moins une des deux pièces de construction (2, 3) en forme de plaques.

11. Procédé selon la revendication 10,
**caractérisé en ce que,**
la pièce de construction (2) en forme de plaque présentant ledit au moins un élément structuré (5) est enduite d'une couche d'un matériau visco-élastique (4), dans lequel la couche de matériau visco-élastique (4) est également introduite à l'intérieur de l'espace creux (6) constitué par ledit au moins un élément structuré (5).

12. Procédé selon la revendication 10,
**caractérisé en ce que,**
la couche (4) d'un matériau visco-élastique n'est pas appliquée sur l'autre pièce de construction (3) en forme de plaque ne comportant pas au moins un élément structuré (5).

13. Procédé selon la revendication 10, 11 ou 12,
**caractérisé en ce que,**
l'élément structuré (5) est obtenu par une procédure de formage appliquée sur la pièce de construction (2) en forme de plaque.

14. Application du matériau de liaison selon l'une des revendications 1 à 9, pour un carter de machine, un miroir réflecteur, un semi-produit pour une pièce emboutie, un élément de façade, un conteneur, un coffrage, une cloison de séparation ou une tôle de carrosserie.
